# EUROPEAN PATENT APPLICATION

(11) **EP 4 005 869 A1**
(43) Date of publication of application: **01.06.2022**
(21) Application number: 20848209.1
(22) Date of filing: 31.07.2020
(51) Int. Cl.: B60N 2/16, A47C 1/026, B60N 2/235

(54) **CLUTCH MECHANISM AND SEAT STRUCTURE**

(30) Priority: 31.07.2019 JP 2019141843
(71) Applicant: Delta Kogyo Co., Ltd., Aki-gun, Hiroshima 735-8501 (JP)
(72) Inventor: UMEZAKI, Kiyonori, Aki-gun, Hiroshima 735-8501 (JP); FUJITA, Etsunori, Aki-gun, Hiroshima 735-8501 (JP)
(74) Representative: Hoffmann Eitle
(86) International application number: PCT/JP2020/029546
(87) International publication number: WO 2021/020580

(57) **Abstract**

To reduce a whirling movement and abnormal noise of an output gear part. An input-side shaft part 132 and an output gear part 131 which compose a rotating operation member 130 are integrally formed. Owing to this configuration, a bearing of a feed mechanism is integrated with the output gear part, leading to a reduction in a whirling movement of the output gear part due to axial misalignment. A stepped surface 131a formed on an outer periphery of the rotating operation member 130 is stacked on an outer surface 212a of a peripheral edge part of a gear-part through-hole 212 of an attachment bracket 210, and an elastic member 230 is provided between an inner surface 212b of the peripheral edge part of the gear-part through-hole 212 and a brake mechanism 120. This also reduces a whirling movement of the output gear part 131.

## Description

### Technical Field

The present invention relates to a clutch mechanism and a seat structure including the clutch mechanism.

### Background Art

For example, Patent Document 1 discloses a turning force transmission control mechanism (clutch mechanism) assembled in a lifter mechanism or the like of a seat structure, and including a turning control part (brake mechanism) which is kept locked while an input torque for turning a feed mechanism does not act, and is unlocked when the feed mechanism is turned by an input torque. In the brake mechanism, internal teeth of an internal gear and external teeth of lock plates engage with each other while the input torque for turning the feed mechanism does not act, and they are disengaged when the feed mechanism is rotated. That is, in this structure, the locked state is produced by the engagement of the teeth of the gears, and only when the turning force acts on the feed mechanism, the teeth are disengaged. Therefore, even when rotational force from an output part side acts, the internal teeth of the internal gear and the external teeth of the lock plates are not disengaged and the locked state is maintained. This prevents the mechanism connected to the output part from being gradually displaced by turning force acting on the output part. For example, in the case where the turning force transmission control mechanism is used in a lifter mechanism or the like of a seat structure of a vehicle, even when turning force due to vibration or the like during traveling acts on the output part from a seat cushion side, the gradual descent of the seat cushion is prevented.

### Prior Art Document

### Patent Document

Patent Document 1: Japanese Patent Application Laid-open No. 2016-78850

### Summary of the Invention

### Problems to Be Solved by the Invention

The clutch mechanism of Patent Document 1 is configured such that its output gear part (pinion) projecting from the brake mechanism is engaged with a transmission gear (sector gear) of the lifter mechanism that is to be operated, to transmit the turning force of the feed mechanism. However, the output gear part (pinion) has a cantilever structure with its one end supported only by the brake mechanism side, and when receiving a load of the transmission gear (sector gear), the output gear (pinion) makes a whirling movement around its axial center, and the teeth of the output gear part (pinion) may generate abnormal noise with the teeth of the transmission gear (sector gear).

The present invention was made in consideration of the above and has an object to provide a clutch mechanism that achieves a reduction in a whirling movement of an output gear part caused by the action of a transmission gear that is to be operated and a reduction in abnormal noise generated by the teeth of the output gear part with the teeth of the transmission gear, and to provide a seat structure including the clutch mechanism.

### Means for Solving the Problems

To solve the aforesaid problem, a clutch mechanism of the present invention includes:
an attachment bracket for fixing the clutch mechanism at a predetermined position of a seat frame of a seat structure where to attach the clutch mechanism; and
a tubular cover member between which and the attachment bracket a rotation mechanism unit is partly housed,
wherein the rotation mechanism unit comprises:
   a feed mechanism which rotates from a neutral position by a predetermined angle when an input torque acts on the feed mechanism;
   a brake mechanism which becomes unlocked to rotate when the feed mechanism is rotated by the input torque, and while unlocked, transmits rotational force to a transmission gear that is to be operated; and
   a rotating operation member in which an input-side shaft part located toward the feed mechanism and an output gear part located opposite to the input-side shaft part in terms of an axial direction are integrally formed,
wherein the rotating operation member is disposed with the output gear part penetrating through and projecting from a gear-part through-hole formed in the attachment bracket, and a stepped surface formed on an outer periphery of the rotating operation member at a position closer to the input-side shaft part than the output gear part is stacked on an outer surface of a peripheral edge part of the gear-part through-hole, and
wherein, between an inner surface of the peripheral edge part of the gear-part through-hole and the brake mechanism, an elastic member biasing the outer surface of the peripheral edge part toward the stepped surface is provided.

Preferably, the clutch mechanism further includes an output-side end-part support bracket which has a base end part supported by the attachment bracket and supports an output-side end part of the output gear part of the rotating operation member.

Preferably, the output gear part constitutes a pinion and engages with a sector gear which is the transmission gear.

The clutch mechanism of the present invention is assembled in a lifter mechanism, a reclining mechanism, or a lumbar control mechanism of the seat structure to be used.

The present invention further provides a seat structure including a lifter mechanism, a reclining mechanism, or a lumbar control mechanism in which the clutch mechanism is assembled.

### Effect of the Invention

According to the present invention, the input-side shaft part and the output gear part which compose the rotating operation member are integrally formed. Conventionally, a shaft member that supports a feed mechanism-side member and an output gear part are separate bodies, and axial misalignment therebetween is one factor causing a whirling movement of the output gear part. In the present invention, on the other hand, this axial misalignment is solved because they are integrated. In addition, the stepped surface formed on the outer periphery of the rotating operation member is stacked on the outer surface of the peripheral edge part of the gear-part through-hole of the attachment bracket, and the elastic member is provided between the inner surface of the peripheral edge part of the gear-part through-hole and the brake mechanism. Therefore, the rotating operation member is surface-supported by the attachment bracket, and external force is absorbed by the elastic member on the inner side of the attachment bracket while the rotating operation member is surface-supported. This operation further reduces the whirling movement of the output gear part. Further, since the input-side shaft part and the output gear part are integrated, the center of gravity of the output gear part is closer to the attachment bracket as compared with the case where they are separately formed, enabling a reduction in a moment applied to the output gear part. The above configuration of the present invention achieves a reduction in the whirling movement of the output gear part and a reduction in abnormal noise such as gear rattling noise of teeth of the output gear part and the transmission gear.

### Brief Description of Drawings

[FIGs. 1] FIGs. 1(a), (b) are perspective views of a seat frame including a lifter mechanism in which a clutch mechanism according to one embodiment of the present invention is assembled.
[FIGs. 2] FIG. 2(a) is a perspective view of the clutch mechanism seen from an input side, and FIG. 2(b) is a perspective view of the clutch mechanism seen from an output side.
[FIGs. 3] FIG. 3(a) is a plan view of the clutch mechanism seen from the input side,
FIG. 3(b) is a left side view of FIG. 3(a), and FIG. 3(c) is a bottom view of FIG. 3(a).
[FIG. 4] FIG. 4 is a sectional view taken along the B-B line in FIG. 3(a).
[FIG. 5] FIG. 5 is an exploded perspective view of the clutch mechanism.
[FIG. 6] FIG. 6 is an explanatory view of an output-side end-part support bracket.

### Modes for Carrying out the Invention

The present invention will be hereinafter described in more detail based on an embodiment illustrated in the drawings.

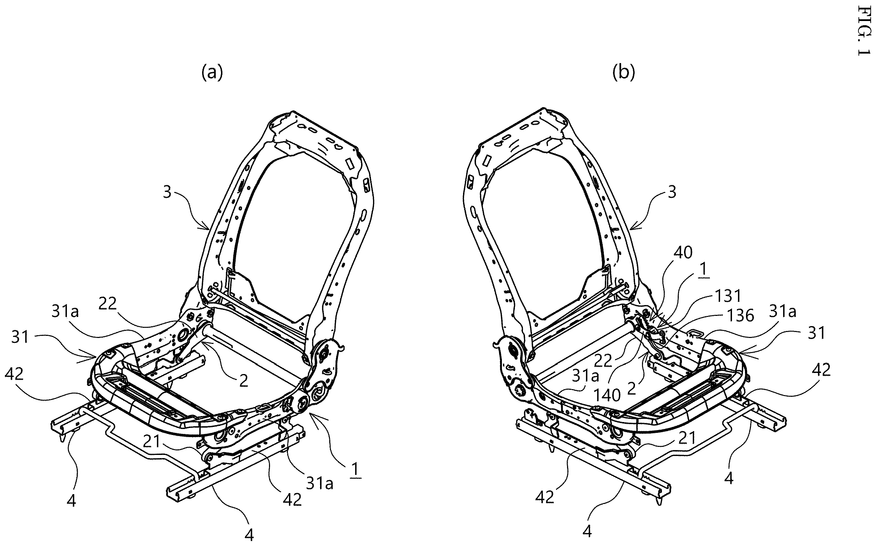

FIGs. 1(a), (b) illustrate a seat frame 3 of a seat structure provided with a lifter mechanism 2 in which a clutch mechanism 1 according to one embodiment of the present invention is assembled. A cushion frame 31 of the seat frame 3 is supported by upper rails 42, 42 of a pair of sliders 4, 4. The lifter mechanism 2 has: front links 21, 21 and rear links 22, 22 disposed between the upper rails 42, 42 and side frames 31a, 31a of the cushion frame 31; and spring members (not illustrated) such as spiral springs biasing the cushion frame 31 (side frames 31a, 31a) upward relative to the upper rails 42, 42. The lifter mechanism 2 also includes the clutch mechanism 1 according to this embodiment.

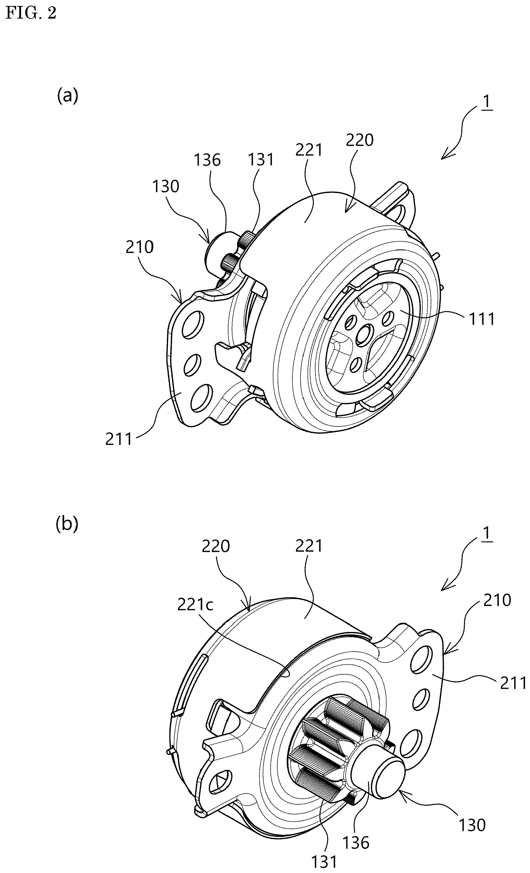

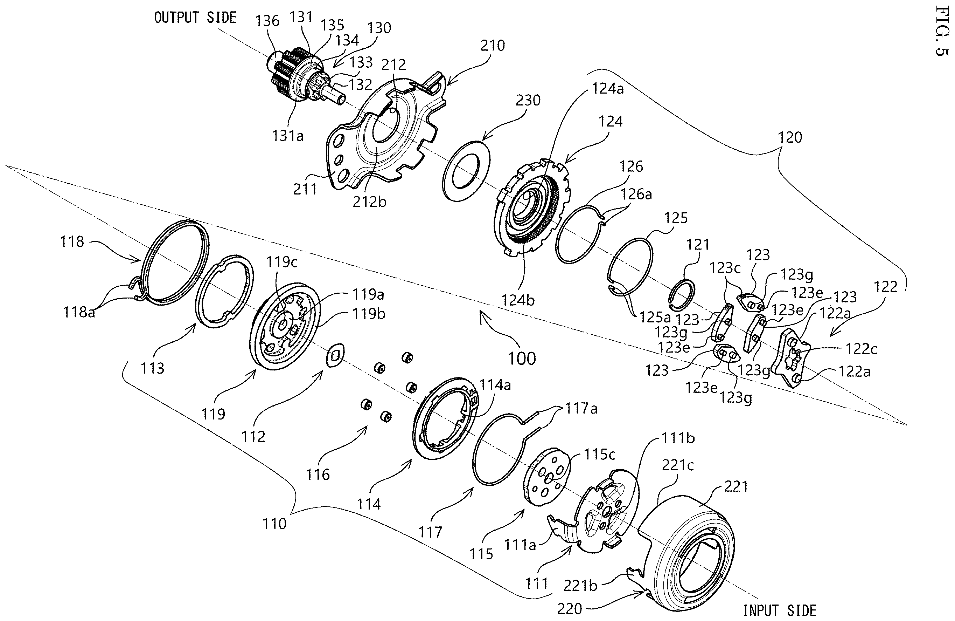

As illustrated in FIGs. 2 to FIG. 5, the clutch mechanism 1 includes a rotation mechanism unit 100 including a feed mechanism 110, a brake mechanism 120, and a rotating operation member 130. The application of an input torque for rotating the feed mechanism 110 brings the brake mechanism 120 into an unlocked state in which it transmits rotational force, and rotate an output gear part 131 of the rotating operation member 130 through the brake mechanism 120. When force to apply the input torque is no longer given, the brake mechanism 120 becomes locked. While the brake mechanism 120 is locked, even if rotational force acts on the output gear part 131, this rotational force does not release the locked state.

The feed mechanism 110 and the brake mechanism 120 of the rotation mechanism unit 100 are housed between an attachment bracket 210 that includes a flange 211 used to fix the clutch mechanism 1 at a predetermined position of the seat frame 3 (in this embodiment, an outer surface of the side frame 31a) and a tubular cover member 220 whose tubular part 221 has an output-side edge 221c fixed to the attachment bracket 210. Parts, of the rotating operation member 130, that are inserted in the feed mechanism 110 and the brake mechanism 120 are naturally also disposed therebetween. The main features of the present invention for reducing a whirling movement of the output gear part 131 of the rotating operation member 130 are the structure of the rotating operation member 130 and means for supporting it on the attachment bracket 210, and the feed mechanism 110 and the brake mechanism 120 may be the mechanisms disclosed in Patent Document 1 or the like and are not limited. In the following, examples of the feed mechanism 110 and the brake mechanism 120 will be first briefly described.

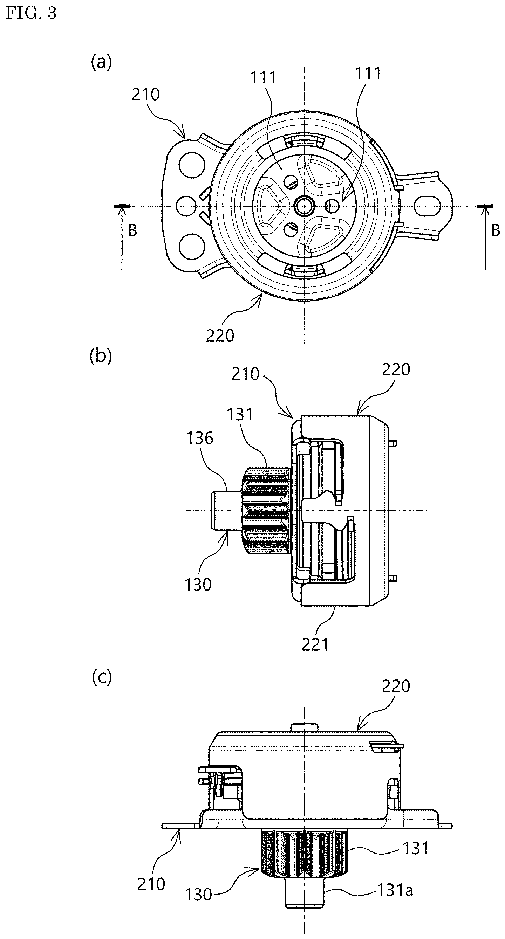

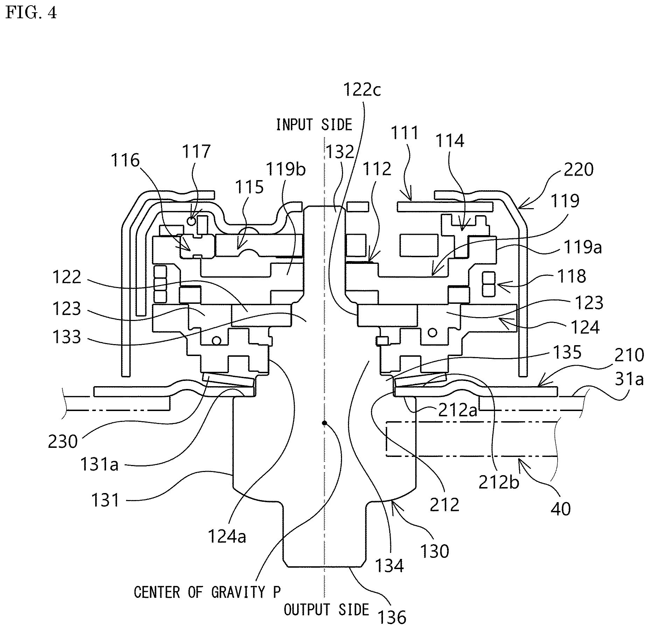

The feed mechanism 110 includes a lever 111, a retainer 114, a cam 115, rollers 116, a centering spring 117, and a lever spring 118. As illustrated in FIG. 3(a) and FIG. 4, the lever 111 is provided on an input side in terms of the axial direction (opposite to a side closer to the outer surface of the side frame 31a when the clutch mechanism 1 is attached to the outer surface of the side frame 31a) and is rotatable in either the positive direction or the reverse direction relative to the tubular cover member 220. The lever 111 is connected to a not-illustrated operation member and is manually or electrically rotatable, and it is rotated by an input torque manually or electrically applied in the positive or reverse direction. The peripheral surface of the tubular part 221 of the tubular cover member 220 is partly cut out, and this cutout range is a rotation range when the lever 111 rotates in the positive or reverse rotation.

The retainer 114 is substantially ring-shaped, and in its output-side surface (a surface closer to the outer surface of the side frame 31a), roller placement grooves 114a are arranged at equal intervals along the circumferential direction, and the rollers 116 are rotatably disposed in the roller placement grooves 114a. In the inner peripheral range of the retainer 114, the cam 115 is disposed, and by rotating, the cam 115 is capable of pressing the rollers 116 outward in the radial direction. The cam 115 is fixed to the lever 111.

The retainer 114 supports the centering spring 117. The centering spring 117 is substantially circular, but its end parts 117a, 117a do not overlap with each other but are bent at about 90 degrees to project in the same direction. The centering spring 117 is disposed with the end parts 117a, 117a engaged with the cam 115 and biases the cam 115 so that the position of the cam 115 in the retainer 114 is constantly kept at a neutral position.

Therefore, when the input torque for rotating the lever 111 is applied, the cam 115 rotates in the positive or reverse direction to press the rollers 116 outward in the radial direction as described above, but when the input torque for rotating the lever 111 is no longer applied, the relative position of the cam 115 in the retainer 114 is returned to the neutral position by the elastic force of the centering spring 117.

An input plate 119 has a predetermined thickness and has a peripheral wall 119a formed on its surface adjacent to the retainer 114 and the cam 115. In a circular recession surrounded by the peripheral wall 119a, the rollers 116 supported by the retainer 114 are housed. When the cam 115 rotates in either direction to press the rollers 116 outward in the radial direction, the rollers 116 are pressed against the inner peripheral surface of the peripheral wall 119a. Therefore, when the cam 115 rotates, the input plate 119 also rotates with the retainer 114.

The lever spring 118 is spirally formed, has end parts 118a bent outward in the circumferential direction, and is disposed with the end parts 118a engaged with a projecting piece 111a of the lever 111 and a projecting piece 221b of the tubular cover member 220 respectively. The lever 111 is at a neutral position when its projecting piece 111a overlaps with the projecting piece 221b of the tubular cover member 220, and when the lever 111 rotates, the lever spring 118 applies restoring force to return the lever 111 to this neutral position.

Reference sign 112 denotes a wave washer disposed between the cam 115 and a center projection 119b of the input plate 119, for the axial-direction biasing, and reference sign 113 denotes a spacer.

Next, the brake mechanism 120 will be described. The brake mechanism 120 includes a rotating plate 122, lock plates 123, an internal gear 124, and lock springs 125, 126.

The rotating plate 122 is substantially rhombic and has two columnar projections 122a, 122a provided on its one surface at symmetric positions with respect to the center. The columnar projections 122a, 122a engage with the input plate 119, and the rotating plate 122 rotates when the input plate 119 rotates by a predetermined angle. At the center of the rotating plate 122, a fitting hole 122c is penetratingly formed. The rotating operation member 130 has a connection shaft part 133 located between the output gear part 131 and an input-side shaft part 132 and having a toothed outer periphery, and this connection shaft part 133 is fitted in the fitting hole 122c. Therefore, when the rotating plate 122 rotates, the rotating operation member 130 rotates. Further, the rotating plate 122 is disposed within an inner periphery range, of the internal gear 124, where internal teeth 124b are formed and has such a size as to be rotatable in either direction.

The number of the lock plates 123, 123 is four corresponding to the oblique sides of the substantially rhombic rotating plate 122. In the lock plates 123, 123, first projections 123e, 123e and second projections 123g, 123g are provided, which engage with corresponding mating engagement parts (not illustrated) formed in the input plate 119.

The rotating plate 122 and the lock plates 123, 123 are disposed between the input plate 119 and the internal gear 124 with a retaining ring 121 therebetween. The lock plates 123, 123 have external teeth 123c, 123c engageable with the internal teeth 124b of the internal gear 124.

The lock springs 125, 126 are substantially ring-shaped, and their end parts 125a, 125a or 126a, 126a are bent toward the input side at a substantially right angle at positions apart from each other. The end parts 125a, 125a of the lock spring 125 are inserted between the two adjacent lock plates 123, 123 while the lock spring 125 are contracted in diameter, to bias these two lock plates 123, 123 outward in the circumferential direction. Similarly, the end parts 126a, 126a of the other lock spring 126 are inserted between the two other adjacent lock plates 123, 123 while the lock spring 126 is contracted in diameter, to bias the other two lock plates 123, 123 outward in the circumferential direction. That is, the lock springs 125, 126 bias the lock plates 123, 123 outward in the circumferential direction to apply force that presses the external teeth 123c, 123c against the internal teeth 124b of the internal gear 124.

In the clutch mechanism 1 of this embodiment, when the lever 111 is rotated in one direction from the locked state, the cam 115 rotates in the same direction to press the rollers 116 outward in the radial direction, thereby rotating the input plate 119 with the retainer 114. As a result of the rotation of the input plate 119, in the brake mechanism 120, the lock plates 123, 123 engaged with the input plate 119 through the first projections 123e, 123e and the second projections 123g, 123g and the rotating plate 122 engaged with the input plate 119 through the columnar projections 122a, 122a move in sequence to disengage the external teeth 123c, 123c and the internal teeth 124b, so that the locking is released. The rotation of the rotating plate 122 causes, through the connection shaft part 133, the output gear part 131 to rotate. Consequently, a sector gear 40 engaged with the output gear part 131 rotates to adjust the height of the cushion frame 31.

Thereafter, when the input torque is no longer applied, the lock springs 125, 126 are restored to return the input plate 119 to the neutral position and also bias the external teeth 123c, 123c of the lock plates 123 in such a direction as to engage the external teeth 123c, 123c with the internal teeth 124b, resulting in the locking at a desired-angle rotation position. Consequently, the cushion frame 31 adjusted in height is kept at a predetermined position.

The rotating operation member 130 includes the output gear part 131 and the input-side shaft part 132 and they are integrally formed as described above. They may be integrally molded or may be separate bodies integrated by welding. Note that, in this embodiment, the connection shaft part 133 is also integrated with the input-side shaft part 131 and the output gear part 132. The input-side shaft part 132 is a bearing part of center holes 111b, 115c, 119c of the lever 111, the cam 115, and the input plate 119 composing the feed mechanism 110. That is, owing to the integration of the input-side shaft part 132 and the output gear part 131 which are conventionally separate bodies, there is no axial misalignment therebetween, and a whirling movement of the output gear part 132 caused by the axial misalignment is solved.

The feed mechanism 110 and the brake mechanism 120 are housed in the tubular cover member 220, and the attachment bracket 210 is fixed to the output-side edge 221c of the tubular cover member 220 as described above. The attachment bracket 210 is fixed to the outer surface of the side frame 31a where to attach the clutch mechanism 1. The attachment bracket 210 has a gear-part through-hole 212 and is disposed with the output gear part 131 projecting from the gear-part through-hole 212. The output gear part 131 further penetrates through and projects from an attachment hole formed in the side frame 31a where to attach the clutch mechanism 1, toward the inner side of the side frame 31a. Between the output gear part 131 and the connection shaft part 133 closer to the input-side shaft part 132, a first small-diameter part 134 and a second small-diameter part 135 are formed in order from the connection shaft part 133 side, and the output gear part 131 has a stepped surface 131a that is an axial-direction end surface located toward a boundary with the second small-diameter part 135.

The stepped surface 131a is stacked on the outer surface 212a of the peripheral edge part of the gear-part through-hole 212 (a surface toward the side frame 31a where to attach the clutch mechanism 1) and is disposed in surface contact. The first small-diameter part 134 is supported in a bearing hole 124a formed at the center of the internal gear 124.

Between the output-side end surface of the internal gear 124 and an inner surface 212b of the peripheral edge part of the gear-part through-hole 212, an elastic member 230 biasing the outer surface 212a of the peripheral edge part of the gear-part through-hole 212 against the stepped surface 131a of the output gear part 131 is provided. The elastic member 230 is constituted by a disc spring in this embodiment. It can be constituted by a disc spring washer, a wave washer, or the like other than the disc spring.

With this structure, the output gear part 131 of the rotating operation member 130 is supported by the attachment bracket 210 in surface contact. Therefore, this support in surface contact makes it difficult for the output gear part 131 to make a whirling movement. In addition, owing to the axial-direction biasing by the elastic member 230, external force that swings the output gear part 131 is easily absorbed. Further, in this embodiment, the input-side shaft part 132 is integrally formed with the output gear part 131 as described above. Therefore, the center of gravity P of the output gear part 131 is closer to the input-side shaft part 132 (closer to the attachment bracket 210), that is, closer to the side frame 31a in the state in which the output gear part 131 penetrates through the attachment hole of the side frame 31a where to attach the clutch mechanism 1 and is located on the inner side of the side frame 31a, than the center of gravity of the sole output gear part 131 in the case where the output gear part 131 is separately formed from the input-side shaft part 132. This reduces the influence of a moment applied to the output gear part 131 when it engages with the sector gear 40.

Owing to the above operations, it is possible to reduce a whirling movement of the output gear part 131 to reduce abnormal noise at the time of the operation, such as gear rattling noise generated by the teeth of the output gear part 131 with the teeth of the sector gear 40.

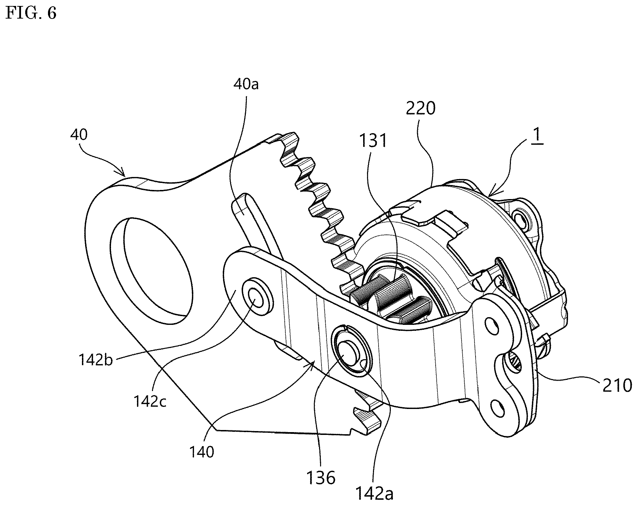

Further, an output-side end part 136, of the rotating operation member 130, located more inward than the output gear part 131 projecting to the inner side of the side frame 31a is preferably supported by an output-side end-part support bracket 140 as illustrated in FIG. 1(b) and FIG. 6. The output-side end-part support bracket 140 is formed of a plate-shaped member having a substantially L-shape in a plan view and has a base end part 141 connected to the attachment bracket 210 through the side frame 31a and a facing surface 142 facing the output-side end part 136. In this facing surface 142, a support hole 142a is formed to support the output-side end part 136. Consequently, the output-side end part 136 of the rotating operation member 130 is also supported, enabling a further reduction in the whirling movement of the output gear part 131 and a further reduction in the abnormal noise. Preferably, a long hole 40a in a substantial arc shape is formed in the sector gear 40 and a leading end part 142b of the facing surface 142 of the output-side end-part bracket 140 is inserted in the long hole 40a using a shaft member 142c so that the leading end part 142b of the facing surface 142 is supported by the sector gear 40. Consequently, the output-side end part 136 is more stably supported.

### Explanation of Reference Signs

- 1: clutch mechanism
- 2: lifter mechanism
- 3: seat frame
- 31: cushion frame
- 31a: side frame
- 40: sector gear
- 110: feed mechanism
- 111: lever
- 114: retainer
- 115: cam
- 116: roller
- 117: centering spring
- 118: lever spring
- 120: brake mechanism
- 121: input plate
- 122: rotating plate
- 123: lock plate
- 124: internal gear
- 125: lock spring
- 126: lock spring
- 130: rotating operation member
- 131: output gear part
- 131a: stepped surface
- 132: input-side end part
- 133: connection shaft part
- 134: first small-diameter part
- 135: second small-diameter part
- 136: output-side end part
- 140: output-side end-part support bracket

## Claims

1. A clutch mechanism compri sing:
an attachment bracket for fixing the clutch mechanism at a predetermined position of a seat frame of a seat structure where to attach the clutch mechanism; and
a tubular cover member between which and the attachment bracket a rotation mechanism unit is partly housed,
wherein the rotation mechanism unit comprises:
a feed mechanism which rotates from a neutral position by a predetermined angle when an input torque acts on the feed mechanism;
a brake mechanism which becomes unlocked to rotate when the feed mechanism is rotated by the input torque, and while unlocked, transmits rotational force to a transmission gear that is to be operated; and
a rotating operation member in which an input-side shaft part located toward the feed mechanism and an output gear part located opposite to the input-side shaft part in terms of an axial direction are integrally formed,
wherein the rotating operation member is disposed with the output gear part penetrating through and projecting from a gear-part through-hole formed in the attachment bracket, and a stepped surface formed on an outer periphery of the rotating operation member at a position closer to the input-side shaft part than the output gear part is stacked on an outer surface of a peripheral edge part of the gear-part through-hole, and
wherein, between an inner surface of the peripheral edge part of the gear-part through-hole and the brake mechanism, an elastic member biasing the outer surface of the peripheral edge part toward the stepped surface is provided.

2. The clutch mechanism according to claim 1, further comprising an output-side end-part support bracket which has a base end part supported by the attachment bracket and supports an output-side end part of the output gear part of the rotating operation member.

3. The clutch mechanism according to claim 1 or 2, wherein the output gear part constitutes a pinion and engages with a sector gear which is the transmission gear.

4. The clutch mechanism according to any one of claims 1 to 3, the clutch mechanism being assembled in a lifter mechanism, a reclining mechanism, or a lumbar control mechanism of the seat structure.

5. A seat structure comprising a lifter mechanism, a reclining mechanism, or a lumbar control mechanism in which the clutch mechanism according to any one of claims 1 to 4 is assembled.
